(19) Europäisches Patentamt
European Patent Office
Office européen des brevets

(11) **EP 4 432 172 A1**

(12) **EUROPEAN PATENT APPLICATION**

(43) Date of publication:
**18.09.2024 Bulletin 2024/38**

(21) Application number: **23162338.0**

(22) Date of filing: **16.03.2023**

(51) International Patent Classification (IPC):
**G06N 10/60** (2022.01)   **G06N 10/20** (2022.01)
**G06N 10/40** (2022.01)

(52) Cooperative Patent Classification (CPC):
**G06N 10/60;** G06N 3/0464; G06N 3/048;
G06N 3/09; G06N 10/20; G06N 10/40; G06V 10/40;
G06V 30/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Terra Quantum AG
9000 St. Gallen (CH)**

(72) Inventors:
• **Senokosov, Arsenii
9000 St. Gallen (CH)**

• **Sedykh, Alexander
9000 St. Gallen (CH)**
• **Sagingalieva, Asel
9000 St. Gallen (CH)**
• **Melnikov, Alexey
9000 St. Gallen (CH)**

(74) Representative: **Kretschmann, Dennis
Boehmert & Boehmert
Anwaltspartnerschaft mbB
Pettenkoferstraße 22
80336 München (DE)**

(54) **HYBRID QUANTUM CLASSICAL CLASSIFICATION SYSTEM FOR CLASSIFYING IMAGES AND TRAINING METHOD**

(57)   A hybrid quantum-classical computation system for classifying a grid of features provided as an input, comprising a convolutional block comprising a convolutional filter configured to receive the grid of features and to output a plurality of output features for the grid of features based on a trainable configuration of the convolutional filter; a flattening layer for transforming the filtered grid of output features received from the convolutional block into a flattened feature vector ;a classifying block configured to receive the flattened feature vector and to generate an output classification, wherein the classifying block comprises a plurality of independent variational quantum circuits; wherein the variational quantum circuits of the plurality of independent variational quantum circuits receive different subsets of features from the flattened feature vector as an input feature vector; and wherein measured outputs of the plurality of independent variational quantum circuits are combined to determine a label as the output classification.

Fig. 1

**Description**

FIELD OF THE INVENTION

The present invention is in the field of quantum computing. More precisely, the present invention relates to a hybrid quantum-classical computation system as part of a trainable classifier.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, promising applications for near term available quantum processors exist, i.e. noisy intermediate-scale quantum (NISQ) devices, such as variational quantum algorithms. In variational quantum algorithms, the action of the quantum gates is parametrized in terms of variational parameters, and the variational parameters may be systematically varied with the help of a classical computing resource, in a manner analogous to machine learning. By varying the variational parameters to extremize a cost function, which attributes a cost to the output of the variational quantum circuit with respect to an optimal solution, an output of the variational quantum circuit can be "trained" to provide an optimal solution to an unseen problem. Entanglement between different qubits may give access to a large internal state space to provide "quantum advantage".

For example, Henderson et al. ("Quanvolutional Neural Networks: Powering Image Recognition with Quantum Circuits") study quantum machine learning (QML) methods involving for image classification, including a "quanvolutional layer" as part of convolutional image encoding. The quanvolutional layer processes the input features according to randomly determined parametrized actions to generate encoded features for analysis by a decoding module, which provides a classification result.

SUMMARY OF THE INVENTION

However, quantum devices are still not widely available and may be limited both in the number of qubits as well as in circuit depth in practical implementations, which also limits the application of NISQ devices as part of variational quantum circuits.

In view of this state-of-the-art, the object of the invention is to provide an improved classifier for a grid of features, such as a pixel map of an image, including quantum circuit based architectures, which can efficiently employ relatively small, realizable quantum devices for approximation tasks.

This object is solved by a system for classifying images, a method, and a computer program according to the independent claims. The dependent claims relate to preferred embodiments.

According to a first aspect, the invention relates to a hybrid quantum-classical computation system for classifying a grid of features provided as an input. The system comprises a convolutional block comprising a convolutional filter configured to receive the grid of features as an input and to output a plurality of output features for the grid of features based on a trainable configuration of the convolutional filter. The system further comprises a flattening layer for transforming the filtered grid of output features received from the convolutional block into a flattened feature vector. The system further comprises a classifying block configured to receive the flattened feature vector and to generate an output classification. The classifying block comprises a plurality of independent variational quantum circuits, each comprising a plurality of quantum gates acting on qubits of a qubit register of the respective variational quantum circuit. The plurality of quantum gates comprises variational quantum gates, wherein the action of a variational quantum gate on the qubits of the qubit register is parametrized according to an associated variational parameter, and encoding gates for modifying a state of the qubits of the qubit register according to an input feature vector. The variational quantum circuits of the plurality of independent variational quantum circuits receive different subsets of features from the flattened feature vector as the input feature vector, and measured outputs of the plurality of independent variational quantum circuits are combined to determine a label for the grid of input features as the output classification.

Contrary to prior approaches, in which the available variational quantum circuit complexity bounds the number of possible input features, the system uses a plurality of independent variational quantum circuits to independently process a subset of flattened features extracted from a grid of input features via a convolutional block. As a result, the approach is less limited to an achievable maximum number of processable input features, e.g. defined by a maximum number of features encoded per qubit and the number of available qubits. The inventors surprisingly found in their experiments that despite the lack of entanglement between all qubits of the plurality of variational quantum circuits, a quantum advantage for image classification may still be harnessed. Thus, a viable hybrid quantum-classical computation system for processing and classifying grids of input features can be provided. The label determined for the grid of input features may correspond to a classification into a plurality of (predetermined) output classes and/or may be an identifier for an object/pattern detected by the system in the grid of input features.

The grid of input features may correspond to a two- or multi-dimensional array of numerical values, which may indicate a visual encoding of an image in data. For example, the grid of input features may be a two-dimension pixel grid, wherein numerical values of each pixel may correspond to a grayscale image encoding, such as a brightness value ranging from black to white. The pixel grid may encode an image of an object to be classified, such as a letter, number, or object, e.g. the face of a human, a scene imagined with a camera of a vehicle, or the like. The classification of the system may then attribute an output class to the image, e.g. a certain letter, a certain number, or a corresponding entry in a facial image database.

Similar to known image classification methods in the art, the grid of input features can initially be processed using convolutional filters, wherein the convolutional filter may be applied to different subsets of the grid to generate a filtered grid of output features, wherein the convolutional filter may implement local operations on a group of neighboring features in a grid of features provided as an input. For example, the grid of input features may be used to generate a plurality of square grids of features, such as $3 \times 3$ or $5 \times 5$ grids of neighboring features of the grid of input features. Each of the subsets may be processed by a convolutional filter, which may generate a corresponding filtered feature for the input subset of the grid of features, e.g. through a trained network of artificial neurons. Each of the square grids of features may be processed in parallel by different convolutional features, such as to extract different image features from the square grids of features, e.g. edges or lines in the square grids of feature.

The filtered features obtained using the convolutional filter may produce filtered grids of features, which may be processed further by additional convolutional filters. The convolutional block may then output a plurality of filtered grids of features, e.g. wherein the different filtered grids of features correspond to different filters applied to the grid of input features.

The filtered grid of features may be flattened into a flattened feature vector, which may be a list of features derived from the output of the convolutional block, e.g. using an artificial neural network mapping the filtered grids of features onto a plurality of features according to a plurality of internal weights and biases.

In preferred embodiments, the convolutional block and/or the flattening layer is implemented in classical hardware, in particular using a trainable machine learning model.

The trainable machine learning model may be trained for obtaining a trained machine learning model or may be provided as a trained machine learning model, and the trained machine learning model may process the filtered grid of output features according to a plurality of machine learning parameters, such as the weights and biases of an artificial neural network. The trained machine learning model may be obtained by defining a machine learning architecture, and by training the corresponding machine learning parameters in a training process, e.g. using stochastic gradient descent, or another optimization method, based on historical data and corresponding classes. Following the training process, the trained machine learning model may be configured to produce an optimal output for a subsequent classification stage of the hybrid quantum-classical computation system.

In some embodiments, the system comprises a classical processing system and/or AI processing hardware configured to implement the trained machine learning model, wherein the AI processing hardware in particular comprises a GPU, a neural processing unit, analog memory based hardware, or neuromorphic hardware.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof, such as the afore-mentioned AI processing hardware. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The processing system may implement a trained machine learning model using classical hardware and may process an input grid of features to generate the flattened feature vector, which may be subsequently processed by the plurality of independent variational quantum circuits. Preferably, the number of features in the flattened feature vector is a multiple of the number of qubits in the plurality of variational quantum networks.

In preferred embodiments, each of the variational quantum circuits of the plurality of independent variational quantum circuits is configured to encode a number of inputs into the quantum states of the qubits of its qubit register, and the input feature vector comprises a number of features, which is a multiple of the number of inputs of the variational quantum circuits of the plurality of independent variational quantum circuits.

The number of inputs may be encoded in all or a subset of the qubits of each variational quantum circuit, e.g. a plurality of input features may be encoded into a single qubit or into a subgroup of a plurality of qubits of a variational quantum circuit. In some embodiments, the plurality of input features may be encoded into the quantum states of a plurality of qubits of the variational quantum circuit, wherein the number of qubits may be smaller or greater than the number of inputs. In some embodiments, the number of input features are spread equally among the qubits of the respective variational quantum circuit and may be encoded by manipulating the quantum state of the respective qubit.

For example, the flattening layer may generate a feature vector comprising a number of N features, and each of the variational quantum networks may comprise $M$ qubits, with $N = M * K$, wherein $K$ is a natural number greater than one, i.e. $K \in \{2; 3; 4; ... \}$. The flattened feature vector may be separated into $K$ subsets of features, which may be processed independently by $K$ independent variational quantum circuits. Then each feature of one of the $K$ subsets of features may be encoded in a respective one of the $M$ qubits of the corresponding variational quantum circuit.

The independent variational quantum circuits may process the subsets of features in parallel and/or sequentially. In other words, the plurality of different variational quantum circuits may be implemented using the same or different hardware and the output of each variational quantum circuit may be obtained independently from each other.

A variational quantum circuit may generally comprise a plurality of qubits, whose quantum states may be manipulated by the application of quantum gates applied in sequence or in parallel to single qubits and/or multiple qubits.

The qubits may form a qubit register and can be initialized into an initial state, such as the ground state of each qubit. In some embodiments, after initialization of the qubits into their ground states, superposition states of each qubit in the qubit register are prepared, e.g. via the application of Hadamard gates.

Subsequently, a plurality of quantum gates may be applied to the qubits to transform their state towards an output state. In variational quantum circuits, the action of at least some of the quantum gates in the variational quantum network is parametrized, such that the measured output is a function of variational parameters parametrizing variable actions of the (variational) quantum gates. The combined action of the (at least partially parametrized) quantum gates may be termed a variational quantum network, as the operating principle may be similar to the operation of a neural network.

Further, in the variational quantum circuit, at least one quantum gate is used as an encoding gate, wherein the action of the encoding gate is based on an input feature vector. For example, a value of the input feature vector may be encoded into the qubit by rotating the state of one qubit proportional to the value of the input feature vector through a single qubit rotation.

In some embodiments, the at least one encoding gate comprises single qubit rotations proportional to a value of the input feature vector. The encoding gate may be applied a number of $k$ times as part of each variational quantum circuit, wherein $k$ is an integer value greater than 2, and wherein the variational quantum circuit is parametrized by at least $2k$ variational parameters. Applying the encoding gate multiple times may implement a re-uploading of the input feature vector into the variational quantum circuit, such that the variational quantum circuit may fit a higher order Fourier series to the labelling function.

Two- or multi-qubit gates may create superposition states between the qubits, such as to harness the "quantum advantage" provided by the quantum hardware, wherein such gates may also referred to as entangling gates in the following. For example, when the variational quantum circuit is implemented in a quantum device based on a trapped ion system, the states of different ions in the trapped ion system may be coupled through a joint excitation, e.g. mediated via the Molmer-Sorensen interaction. As another example, pairs of qubits in the qubit register may be entangled via a (tunable) nearest neighbor interaction or exchange of a quantum particle, in order to implement a two-qubit gate, such as a CNOT gate.

In some embodiments, the variational quantum network may be defined in terms of layers of quantum gates, which may act on the qubits to link the qubits in the qubit register. A layer of quantum gates may comprise a cumulative action of a plurality of coherent operations on the state of the qubits in the qubit register. The cumulative action of the coherent operations in one layer should generally act on all qubits of the qubit register which are involved in the computation, or in other words, a layer of quantum gates should directly affect the state of all qubits in the qubit register. Each layer should comprise at least one multi-qubit gate and at least one variational quantum gate (which in principle could be the same gates). The skilled person will appreciate that a plurality of the quantum gates in a layer may be applied in parallel to the qubits to shorten the sequence of coherent operations on the state of the qubits in a layer. The subsequent application of a plurality of layers of quantum gates to the qubits may then form the variational quantum network, with the variational quantum network being parametrized by variational parameters for each layer.

The layers may contain the same types of quantum gates and may be applied sequentially to the qubit register. For example, each layer may feature the same architecture of quantum gates while different elements of the variational parameters may apply to the variational gates of the layer. In other words, the layers may feature the same quantum gate architecture, but the action of the quantum gates on the qubits in each layer may differ based on the variational parameters and/or an input feature vector.

After the layers of quantum gates have acted on the qubits, the qubits can be measured to obtain a characteristic outcome of the variational quantum circuit with respect to the known initial state. The outcome of the quantum mechanical computation may be measured based on the computational basis states of the qubits. The computational basis states may be orthogonal basis states of the Hilbert space spanned by the tensor product of the basis states of each qubit.

Initial variational parameters for the variational quantum gates can encode an initial (random) guess for an optimal classifier, and the outcome of the evaluation of the variational quantum circuit with the variational parameters can be measured (repeatedly) to determine a corresponding label. Based on the label, a cost function may be classically evaluated to attribute a cost to the label, or in other words, a measure is calculated of how good the label is.

By training the system, the variational parameters may be systematically varied in an iterative manner, such that the variational quantum circuit approximates the output label.

In preferred embodiments, the variational parameters of one of the plurality of independent variational quantum circuits are different from the variational parameters of another one of the plurality of independent variational quantum circuits.

For example, each of the variational quantum circuits may be associated with respective variational parameters, which can be different from the variational parameters of any one of the other variational quantum circuits of the plurality of variational quantum circuits.

In preferred embodiments, each of the plurality of independent variational quantum circuits comprises multiple layers of quantum gates, wherein each layer of the multiple layers of quantum gates in particular comprises a variational quantum gate for each of the qubits of the qubit register.

The inventors found that additional layers of gates may increase an accessible Fourier space for the qubits and may thereby improve the classification result. Each layer may comprise different variational parameters, which may be trained, such that the variable action of each layer on the qubits of the variational quantum circuit may be different. Each layer may also comprise entangling gates and/or encoding gates. The encoding gates in each layer may re-encode the same features from the subset of features to the respective qubit, or may encode a different feature of the subset of features, such as to increase a number of features processed by the respective variational quantum circuit, at the expense of additional gates as part of the quantum circuits.

In preferred embodiments, the plurality of independent variational quantum circuits each comprise at least two qubits in their respective qubit registers.

The variational quantum circuits may in principle be designed according to an availability of quantum processing resources, wherein an increased number of qubits may generally increase the Fourier space accessible and thereby the complexity of the internal computation performed by the variational quantum circuit. Generally, each of the variational quantum circuits may process a subset of features from the flattened feature vector corresponding to the number of qubits or a multiple thereof, such as to analyze a certain number of features extracted by the convolutional block and to therefrom determine a value indicative for the output label/class, e.g. a number of numerical values equal to the number of qubits in the variational quantum circuit. Each of the plurality of variational quantum circuits may comprise entangling gates to entangle the quantum states of the at least two qubits.

In preferred embodiments, each of the plurality of independent variational quantum circuits comprises an entangling gate for entangling quantum states of at least two of the qubits of the respective qubit register.

The entangled states of the qubits in each of the plurality of independent variational quantum circuits may be measured to determine a corresponding output, which may be used to determine the output classes.

In preferred embodiments, output states of all qubits in the qubit register of one of the plurality of independent variational quantum circuits are independent from the actions of quantum gates of another one of the plurality of independent variational quantum circuits.

As a result, the variational quantum circuits may be implemented independently, and may be computed in parallel, e.g. using separate hardware implementations, or sequentially, e.g. using the same hardware implementation.

In preferred embodiments, the quantum states of qubits of different variational quantum circuits of the plurality of independent variational quantum circuits are not entangled prior to measurement.

In other words, the qubits of different variational quantum circuits may remain independent throughout the computation.

In preferred embodiments, the plurality of independent variational quantum circuits is implemented in quantum hardware.

In the preliminary experiments of the inventors, the variational quantum circuits were generally implemented in a simulation of a quantum device running on classical hardware, and the experiments showed that the resulting virtual hybrid quantum classical device can achieve similar results, when compared to classical approaches in machine learning, while relying on less trainable parameters which have to be optimized during training. Thus, even a simulated variational quantum circuit may be beneficial in some embodiments, i.e. the plurality of variational quantum circuits may be implemented on a classical computer using a quantum simulator. However, the system is preferably implemented with the variational quantum circuits computed on quantum hardware, such as to reduce a classical processing power and computation time required for simulating complex quantum hardware.

The output of the variational quantum circuits may be measured and mapped to an output feature, e.g. between 0 and 1, for each of the qubits and/or for each of the variational quantum circuits. Said output feature may subsequently be used by the system to determine the output label/class corresponding to the grid of input features.

In preferred embodiments, the measured outputs of the plurality of independent variational quantum circuits are combined using a trainable layer of artificial neurons implemented in classical hardware, in particular a fully connected layer of artificial neurons implemented in classical hardware.

The layer of artificial neurons may implement a coupling between the outputs of the different independent variational quantum circuits, wherein the fully connected layer may introduce a coupling between each one of the variational quantum circuits. The trainable layer of artificial neurons may be trained for optimally combining the measured outputs to obtain a label or may be obtained as a trained layer of artificial neurons. The skilled person will appreciate that not all qubits need to be measured or that some of the measured outputs of one of the variational quantum circuits may be combined or discarded prior to the determination of the classification result using the layer of artificial neurons.

In preferred embodiments, trainable parameters of the convolutional block, the flattening layer, and the classifying block are obtained based on a joint training process, in particular of a machine learning model implemented in classical hardware and the plurality of independent variational quantum circuits implemented in quantum hardware.

The joint training process may train the classical layer to extract suitable features for the respective classification task, may train the flattening layer to map the features extracted in the convolutional block towards respective inputs of the plurality of independent variational quantum circuits, may train the plurality of independent variational quantum circuits to produce outputs, which advantageously transform the flattened feature vector towards measured output features, which are indicative for the classification task, and may train a combination layer of artificial neurons for determining a classification result based on the measured outputs of the plurality of independent variational quantum circuits.

The skilled person will appreciate that in some embodiments, the convolutional block may not be trained together with the variational quantum circuit, but instead a pre-trained convolutional block from a different classification system may be used, and merely portions of the flattening layer preceding the plurality of variational quantum circuits, the classifying block comprising the plurality of independent variational quantum circuits, and a combination layer may be trained in a joint training, which may reduce the complexity of the training task in some embodiments. In that case, only the parameters of the flattening layer and the combination layer may be part of trainable machine learning parameters of a classical part of the hybrid quantum-classical computation system. The flattening layer may comprise a fully connected layer of artificial neurons, such as to map the output of the convolutional block towards a flattened feature vector as an input for the plurality of independent variational quantum circuits.

The system can be trained in an iterative manner, wherein the variational parameters, the machine learning parameters (of the convolution block and/or the flattening layer), and the combination parameters, in the following also jointly referred to as trainable parameters, may be jointly optimized in each step of the iterative process, such that the output label approaches the label of the sample dataset for the same input grid of features.

The iterative process may mimic the training of classical machine learning models, wherein the output label is associated with a cost value based on the cost function. For example, the training may be based on a sample dataset of labels and corresponding sample input feature grids, and the cost function may be a loss function based on the output label and based on the sample label of the sample dataset for the same input grid of features. The cost function may be a mean squared error between the output label and the sample label for the same input grid of features. Thus, the method for training may be based on a sample dataset of labels and corresponding input feature grids. The skilled person will appreciate that the sample data set may be constructed as the hybrid quantum-classical computation system is trained, e.g. by obtaining a data point of the sample dataset, e.g. including input grid of features and a corresponding label, and subsequently training the hybrid quantum-classical computation system based on the data point.

In other examples, the optimal label may be unknown, but a cost may be attributed to a candidate solution based on a problem statement, e.g. a travel time for the traveling salesman problem as an illustrative example, and the trainable parameters may be varied, such that the cost is extremized (maximized or minimized).

The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the cost attributed to the output label by the cost function.

Although the system has been illustrated mostly with respect to an example of images as the input feature, the skilled person will appreciate that the system may be equally suitable to process additional information encoded in terms of a grid of features, which may not necessarily pertain to visual information.

According to a second aspect, the invention relates to a method for determining a label for a grid of input features based on a hybrid quantum-classical computation algorithm. The method comprises receiving the grid of input features and generating a filtered grid of features based on the grid of input features and a convolutional filter. The convolutional filter is configured to output a plurality of output features for the grid of input features based on a trainable configuration of the convolutional filter. The method further comprises flattening the filtered grid of output features into a flattened feature vector, and separating the flattened feature vector into a plurality of flattened feature vector subsets. The method further comprises encoding each of the flattened feature vector subsets into qubits of a corresponding variational quantum circuit of a plurality of independent variational quantum circuits. Each of the plurality of independent variational quantum circuits comprises an encoding gate configured to act on the quantum states of a qubit based on a feature of the corresponding subset of the plurality of flattened feature vector subsets, a variational quantum gate, wherein the action of a variational quantum gate on the qubits of the qubit register is parametrized according to an associated variational parameter, and an entangling gate for creating a superposition of the quantum states of two qubits of the corresponding circuit. The method further comprises obtaining measured outputs based on measuring an output state of each of the plurality of independent variational quantum circuits and combining the measured outputs of the plurality of independent variational quantum circuits to determine a corresponding output label.

Preferably, the label is determined by combining the measured outputs using a trained machine learning model, e.g. a multi-layer perceptron, preferably including a fully connected layer of artificial neurons. However, in some embodiments, after the quantum layer there may not be classical layers, but the output after the quantum layer can be a prediction of the output label for the problem, e.g. by simply concatenating the measured outputs, or combining the measured outputs according to a pre-determined combination function. Determining the label may classify the grid of input features into a pre-determined set of output classes.

The method may use elements and components of the system according to the first aspect or any combination of its embodiments, or may implement any functionality of said components. According to a third aspect, the invention relates to a method for training a hybrid quantum-classical computation system for approximating a labeling function for a grid of input features. The system comprises a machine learning model, implemented on a classical processing system, configured to generate a flattened feature vector based on the grid of input features according to a parametrized transfer function, wherein the parametrized transfer function is parametrized by machine-learning parameters, and wherein the machine learning model comprises convolutional layers of artificial neurons. The system further comprises a plurality of independent variational quantum circuits each comprising a plurality of quantum gates acting on qubits of a respective qubit register, the plurality of quantum gates comprising variational quantum gates, wherein a parametrized action of a variational quantum gate on the qubits of the qubit register is parametrized according to an associated variational parameter, and encoding gates for modifying a state of the qubits of the qubit register according to an input feature vector. The variational quantum circuits of the plurality of independent variational quantum circuits receive different subsets of features from the flattened feature vector as the input feature vector. The system further comprises a combination module, implemented on a classical processing system, configured to receive measured outputs generated by the plurality of independent variational quantum circuits and to combine measured outputs of the plurality of independent variational quantum circuits to determine a classification result, wherein the combination is based on a plurality of trainable combination parameters. The method comprises the steps of providing a sample grid of features to the machine learning model, and receiving the output flattened feature vector from the machine learning model. The method further comprises separating the output flattened feature vector into a plurality of flattened feature vector subsets, and providing each of the flattened feature vector subsets to a corresponding variational quantum circuit of the plurality of variational quantum circuits, and receiving an output label from the combination module based on the measured outputs of the plurality of independent variational quantum circuits. The method further comprises determining a parameter update of the variational parameters and the trainable combination parameters based on a value of a loss function for the output label.

In principle, the machine learning model may already be (partially) trained, and merely a portion of the machine learning model, e.g. as part of a flattening layer, may be trained together with the plurality of independent variational quantum circuits. For example, a portion of a conventional machine learning model based on convolutional layers may be used as an encoder portion, and an output of the encoder portion of the conventional machine learning model may be mapped by a second portion of the machine learning model to the flattened feature vector, such as to prepare the extracted features for processing by the plurality of independent variational quantum circuits. Thus, only the second portion of the machine learning parameters may be trained together with the variational parameters and the combination parameters. In other examples, all of the machine-learning parameters may be trained together with the variational parameters and the combination parameters. In other words, the quantum and classical layers of the hybrid quantum-classical computation system may be trained simultaneously, and the parameter update may update both the parameters of the machine learning model and the variational parameters.

In some embodiments, determining the parameter update comprises determining a vector of derivatives for the variational parameters as part of a parameter update gradient.

The trainable parameters may be updated based on the parameter update gradient, wherein a subset or all of the trainable parameters may be modified based on a value of the gradient and a value for a learning rate quantifying a size of an update step.

In some embodiments, determining the parameter update is based on stochastic gradient descent, preferably including a momentum coefficient based on a previously determined gradient of the cost function.

The gradient of the cost function for the variational parameters may be accessible through the parameter shift rule, in which the variational quantum circuit is evaluated with shifted variational parameters in order to determine partial derivatives of the cost function with respect to the shifted variational parameters.

In some embodiments, the method comprises determining a vector of derivatives for the variational parameters, wherein determining the vector of derivatives may comprise applying the parameter shift rule to a subset of or all of the variational gates at each iteration of the iterative process.

Specifically, for quantum gates with eigenvalues $\pm\frac{1}{2}$, e.g. one-qubit rotation generators in $\frac{1}{2} \{\sigma_x, \sigma_y, \sigma_z\}$, the partial derivative of a function f with respect to a variational parameter $\theta_j$ may be determined according to $\partial_{\theta_j} f = r(f(\theta_j + \pi/2) - f(\theta_j - \pi/2))$.

The partial derivatives of the cost function with respect to the machine learning parameters may be determined with known methods. Hence, the different parts of the hybrid quantum-classical computation system may be jointly optimized based on a gradient composed of the partial derivatives of the cost function with respect to the trainable parameters of both the variational quantum circuit and the machine learning model. For example, the quantum mechanical network can be evaluated repeatedly to determine the partial derivatives of the layers of quantum gates with respect to the variational parameters, and the gradient may be classically computed from the measured partial derivatives as well as classically computed derivatives of the machine learning parameters.

However, the skilled person will appreciate that the variational parameters can equally be optimized in an optimization algorithm without access to the derivatives, e.g. by (randomly) sampling the cost function, such as in the Constrained Optimization By Linear Approximation (COBYLA) algorithm or similar algorithms, and the gradient may be an estimated gradient based on an estimate of the energy landscape of the cost function.

The cost function may then be minimized/maximized by iteratively updating the trainable parameters according to the determined/estimated gradient of the cost function with respect to the trainable parameters, e.g. with an adaptive moment based update function.

In some embodiments, determining the parameter update is based on an update function of a moving average over a gradient of the cost function and of a moving average over the squared gradient of the cost function.

As the adaptive moment based update function depends on the moving average over the gradient of the cost function and the (element) square of the moving average over the gradient of the cost function, the update of the variational parameters may be smoothed by first order and second order moments of the gradient, enabling the descent towards an optimized solution also for a "noisy" quantum system.

In some embodiments, a learning rate for updating the variational parameters and the machine-learning parameters is different.

An optimal performance of the hybrid quantum-classical computation system may require a tuning of a relative speed at which the variational parameters and the machine learning parameters are updated during the training, such that the training converges towards a set of trainable parameters in which both the variational quantum circuit and the machine learning model contribute optimally to the output label. For example, the variational quantum circuit and the machine learning model may converge towards an individual optimal solution at different rates. If the learning rates are not tuned correctly, during training, the system may get stuck in a local minimum, in which one of the variational quantum circuit and the machine learning model contributes less to the output label than in an optimally configured hybrid quantum-classical computation system.

In some embodiments, the learning rate of the variational parameters is larger than the learning rate of the machine learning parameters.

The different learning rates may be estimated based on individual rates of convergence for the machine learning model and the variational parameters, may be based on historical optimization results, or may be determined empirically for the hybrid quantum-classical computation system, e.g. for a sample dataset of input grids of features and corresponding labels.

In some embodiments, the hybrid quantum-classical computation system may be trained with different ratios of the learning rate for updating the variational parameters and the machine-learning or combination parameters to determine an optimal ratio of learning rates for updating the variational parameters and the machine-learning parameters with respect to the labeling function.

For example, the hybrid quantum-classical computation system may be initialized at a fixed initialization point, including the same, e.g. randomly determined, starting values for the trainable parameters each time, and the training may be repeated from the fixed initialization point with different values of the learning rates for the machine learning model and the variational quantum circuit while recording the final results for the cost function for input grids of features not used during training (e.g. not part of the training dataset). In practice, one learning rate may be fixed, e.g. the learning rate associated with the variational parameters, and the other learning rate(s) may be varied, e.g. the learning rate of the machine learning parameters and the combination parameters, which may be the same or different learning rates in some embodiments. The skilled person will appreciate that the learning rate(s) may also decay or be stepped, and the different learning rates may pertain to base learning rates for the machine-learning parameters and the variational parameters, respectively.

Based on the resulting values of the cost function, optimal learning rates may be selected, and the hybrid quantum-classical computation system may subsequently be implemented or further trained based on the previously determined optimal learning rates or their ratio.

By training the system using the method according to the third aspect, the hybrid quantum-classical computation system of the first aspect may be obtained.

According to a fourth aspect, the invention relates to a computer program comprising machine readable instructions, which when the computer program is executed by a processing system cause the processing system to implement a method according to any embodiment of the second or third aspects and/or to implement a system according to any embodiment of the first aspect.

The computer program may be stored on a non-transitory medium as machine readable instructions, which, when the computer program is executed by a processing system, cause the processing system to implement a method according to any embodiment of the second aspect or the third aspect and/or to implement a system according to any embodiment of the first aspect.

The computer program may coordinate a training of the hybrid quantum-classical computation system, and or may implement a hybrid quantum-classical computation system for approximating a given labelling function based on previously obtained trainable parameters.

The computer program may configure the plurality of variational quantum circuits, e.g. by determining an architecture and/or variational parameters of the variational quantum circuits. During an implementation of the system and/or method, the computer program may provide the flattened feature vector subsets to the plurality of independent variational quantum circuits and may receive measured outputs of the variational quantum circuits.

The computer program may further implement and control a machine learning model, which may implement the convolutional block and the flattening layer, and may also implement a machine learning model for combining the measured outputs of the plurality of independent variational quantum circuits to determine the output label for the grid of input features.

In some embodiments, the computer program may control a training of the hybrid quantum-classical computation system, and may determine parameter updates for machine learning parameters, combination parameters and the variational parameters.

DETAILED DESCRIPTION OF EMBODIMENTS

The features and numerous advantages of the method and system according to the present invention will best be understood from a detailed description of preferred embodiments with reference to the accompanying drawings, in which:

Fig. 1          schematically illustrates an example of a hybrid quantum-classical computation system;

Fig. 2          illustrates a flowchart of a method for determining a label for a grid of input features according to an example;

Fig. 3A, 3B     schematically illustrates a hybrid quantum-classical computation system according to another example;

Fig. 4A, 4B     illustrate examples of different handwritten symbols taken from the Modified National Institute of Standards and Technology (MNIST) database;

Fig. 5          illustrates a method for training a hybrid quantum-classical computation system for approximating a labeling function for a grid of input features, according to an example;

Fig. 6A, 6B     illustrate results from training a hybrid quantum-classical computation system as illustrated in Fig. 3A, 3B, according to an example implementation; and

Fig. 7          schematically illustrates an example of a convolutional block comprising a quanvolutional layer.

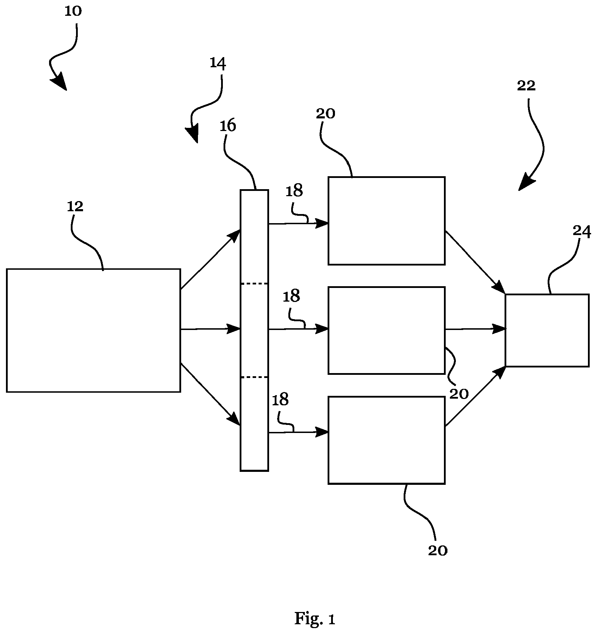

Fig. 1 schematically illustrates an example of a hybrid quantum-classical computation system 10 for classifying a grid of input features into a predetermined set of output classes. The grid of input features may be image data, and the hybrid quantum-classical computation system 10 may identify an object depicted in the image data according to the predetermined set of output classes, such as specific objects, specific letters, or specific facial features. The system 10 can receive the grid of input features at an input of the system 10, which may take the form of an array of numerical values encoded in any suitable format. For example, the grid of input for may be a pixel array, in which color/grayscale values can be encoded as a bit sequence for each pixel of the pixel array.

The grid of input features may be preprocessed, e.g. normalized, and may be received in a convolutional block 12, which may process the grid of input features according to convolutional filters to extract detectable features present in the image information. The output of the convolutional block 12 may be a plurality of filtered grids of features, which may be flattened by a flattening layer 14. The flattening layer 14 may process the features of the filtered grids of features to obtain entries of a flattened feature vector 16, e.g. by pooling the features of the filtered grids of features into pooled feature maps and/or by flattening the pooled feature maps onto the flattened feature vector 16.

The convolutional block 12 and/or the flattening layer 14 may be executed by a machine learning model, which can be implemented in a classical processing system. The classical processing system may comprise a GPU and/or an AI processing device, and may process the grid of input features according to an internal multilayer perceptron (MLP) with layers of artificial neurons processing inputs based on an activation function, which can be parametrized by trainable weights and/or biases for each artificial neuron. An output of the machine learning model may then be generated based on the activations of the artificial neurons in an output layer of the multilayer perceptron. The outputs of the convolutional block 12 may be pooled and may be flattened by the flattening layer 14 of artificial neurons into the flattened feature vector 16.

The flattened feature vector 16 may be separated into a plurality of flattened feature vector subsets 18 (indicated by dashed lines separating the flattened feature vector 16 in figure 1), and each of the subsets 18 may be received by an independent variational quantum circuit 20 of a plurality of variational quantum circuits 20 in a classifying block 22 of the system 10. The plurality of independent variational quantum circuits 20 can each process a respective flattened feature vector subset 18 and may each generate measured outputs, which may be combined in a combination layer 24 for classifying the grid of input features into the predetermined output classes.

The variational quantum circuits 20 may be implemented at least partially on a quantum device, wherein the flattened feature vector 16 or a feature vector derived therefrom is encoded in a quantum state of the quantum device. For example, each subset 18 of the flattened feature vector 16 may comprise a number of $Q$ values, which may be encoded into quantum states of M=$Q$/$J$ qubits, wherein $J$ and M are natural numbers, i.e. $J$, $M \in \mathbb{N}$, and $Q$ mod $J$ = 0, pertaining to an encoding of multiple features into a single qubit as part of an execution of the independent variational quantum circuit 20.

The quantum state of the quantum device may be manipulated based on a configuration of variational quantum gates, whose action can be parametrized by variational parameters. An output state of the quantum device can be measured (repeatedly) and a measured output can be generated based on the repeatedly measured output state.

The combination layer 24 may combine the measured outputs, e.g. based on a weighted linear addition with trainable weights, and preferably based on a fully connected layer of artificial neurons, e.g. an MLP, which may generate output labels based on the measured outputs according to internal combination parameters.

The combination parameters, the machine learning parameters, and the variational parameters can be jointly trained, e.g. based on stochastic gradient descent or a variant thereof, such that the output produced by the combination layer 24 can be used as a label approximating a generally unknown labelling function, which may map the grid of input feature to an output class.

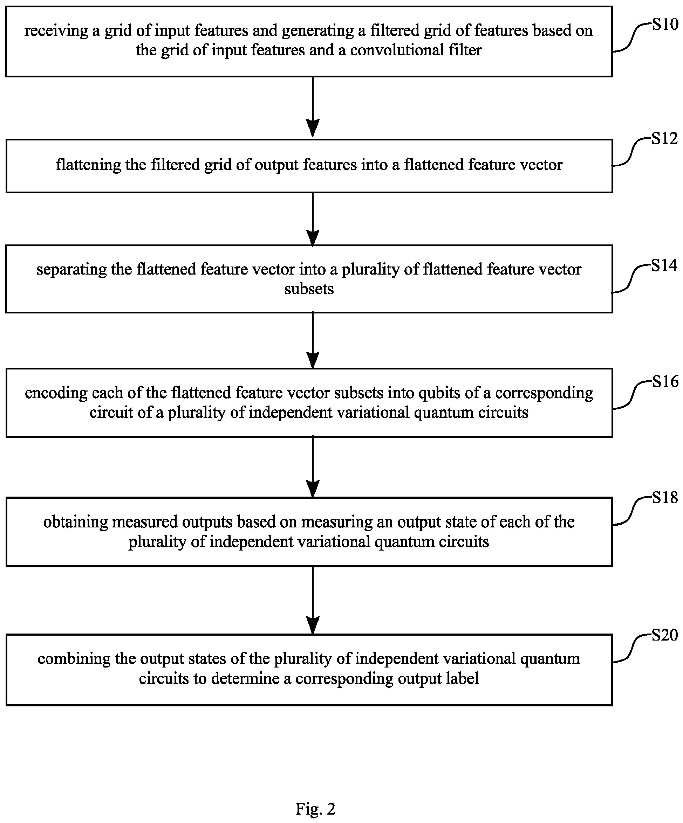

Fig. 2 schematically illustrates a method for determining a label for a grid of input features, e.g. for classifying the grid of input features into a pre-determined set of output classes, which may be implemented using the system 10 illustrated in Fig. 1. The method comprises receiving a grid of input features and generating a filtered grid of features based on the grid of input features and a convolutional filter (S10), and flattening the filtered grid of features into a flattened feature vector 16 (S12). The method further comprises separating the flattened feature vector 16 into a plurality of flattened feature vector subsets 18 (S14), and encoding each of the flattened feature vector subsets 18 into qubits of a corresponding variational quantum circuit 20 of a plurality of independent variational quantum circuits 20 (S16). The method further comprises obtaining measured outputs based on measuring an output state of each of the plurality of independent variational quantum circuits 20 (S18), and combining the output states of the plurality of independent variational quantum circuits 20 to determine a corresponding output label (S20).

The convolutional filter is configured to output a plurality of output features for the grid of input features based on a trainable configuration of the convolutional filter, and the convolutional filter may be applied to different subgroups of the grid of input features to generate the filtered grid of features, e.g. as part of a convolutional block 12. The different subgroups may be small grids of neighboring features, e.g. a $3\times3$ or $5\times5$ sub-grids, which may be processed according to a convolutional filter to generate a filtered value of a filtered grid of features. The convolutional filter may be applied multiple times in parallel, e.g. to process all possible sub-grids of a certain size for the grid of input features, and different convolutional filters may be applied to the grid of input features, such as to extract different characteristics from the data, as known in the art for convolutional neural networks. The output of a convolutional filter may be further processed by additional convolutional filters, such as to concatenate multiple convolutional layers.

The filtered grid of features may be flattened by a pooling and flattening layer 14, which may subsequently be processed by the plurality of independent variational quantum circuits 20. Each of the plurality of independent variational quantum circuits 20 comprises an encoding gate configured to act on the quantum states of a qubit of the relational quantum circuit 20 based on a feature of the corresponding subset of the plurality of flattened feature vector subsets 18, and will generally comprise at least one encoding gate for each qubit of the variational quantum circuit 20. The information encoded in the variational quantum circuit 20 may be processed according to a plurality of variational quantum gates, wherein the action of a variational quantum gate on the qubits of the qubit register is parametrized according to an associated variational parameter, and a plurality of entangling gates for creating a superposition of the quantum states of at least two qubits of the corresponding variational quantum circuit 20.

For example, the variational quantum circuits 20 may initialize a plurality of $M$ qubits in the state $|0\rangle^{\otimes M}$, and encode input features, e.g. $\{x_1,\cdots,x_M\}$, using unitary transformations on the state of the qubits, e.g. as part of single qubit rotations. The variational quantum gates may equally be described by unitaries that encapsulate the variational quantum circuit model parameters as an operator that can be applied to the quantum state of the qubits. The operator may be parametrized by the variational parameters $w_{0,\cdots,L}$. Finally, the quantum state of the qubits of the variational quantum circuit 20 can be measured by a detector, such that the quantum information collapses into, e.g. $M$, classical outputs, which can be mapped to a measured output by taking the expectation value of the circuit 20,

$$\mathrm{f}(x,\theta) = \langle\psi(x,\boldsymbol{\theta})|M|\psi(x,\boldsymbol{\theta})\rangle, \tag{1}$$

where $|\psi(\mathbf{x},\theta)\rangle$ denotes the state of the quantum circuit prior to the measurement, $x$ is the input feature vector and $\theta$ are the variational parameters.

However, the skilled person will appreciate that the number of classical outputs of the variational quantum circuit 20, and $M$, the number of qubits, does not need to be the same, as it may be sufficient to measure some of the qubits to determine the output label.

The measured outputs can be combined using a machine learning model (MLP), such as a fully connected MLP which may take in the measured outputs of all variational quantum circuits 20 as input features, and which can output an output label corresponding to the grid of input features.

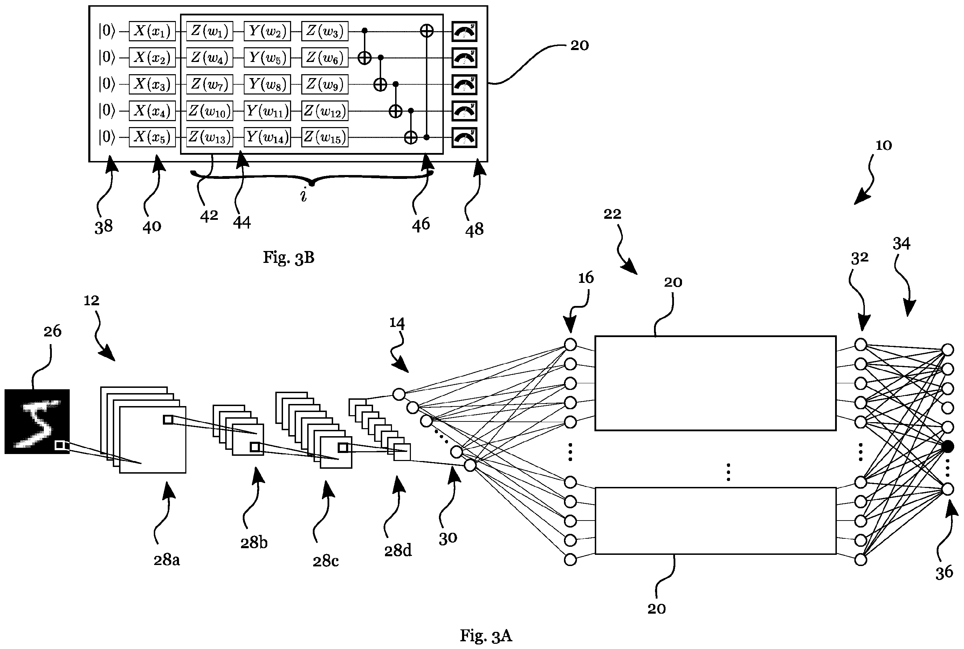

Fig. 3A illustrates a detailed example of a system 10 for classifying images as a grid of input features 26, e.g. according to the method illustrated in Fig. 2. The system 10 comprises a convolutional block 12, which processes the grid of input features 26 according to a plurality of concatenated convolutional filters into filtered grids of features 28a-d. The processing of the grid of input features 26 is illustrated with an example subgroup of features (pictured as a white rectangle in the sample image) being mapped to a feature of the filtered grid of features 28a along solid lines in the figure.

In the illustrated example, the sample image is a $28\times28$ feature grayscale image of a handwritten number (digit), which may be mapped to a tensor, e.g. a $16\times28\times28$ tensor, as a first filtered grid of features 28a by means of multiple convolutional filters, extracting filtered features from the respective subsets of features according to different filter functions. As an example, the convolutional filter may comprise a square kernel with size of $5 \times 5$, which may operate with 1 pixel stride and may apply a 2-pixel padding to process all pixels of the sample image. The resulting filter may be subjected to Batch Normalization, and subsequently an activation function, such as ReLU to obtain the first filtered grid of features 28a. The first filtered grid of features 28a may be pooled (e.g. according to a max-pooling of features), for example towards a $16\times14\times14$ tensor as a second filtered grid of features 28b, which may be processed by a further convolutional filter arrangement towards a $32\times14\times14$ third filtered grid of features 28c. The third filtered grid of features 28c may be further pooled, e.g. towards a $32\times7\times7$ grid of features 28d, and may be flattened into an intermediate flattened feature vector 30 with 1568 features. The intermediate flattened feature vector 30 may subsequently be mapped to a flattened feature vector 16 through a fully connected MLP as part of a flattening layer 14, which may reduce the size of the flattened feature vector 16 towards a number of $N$ features.

The features of the flattened feature vector 16 may be divided into a number of flattened feature vector subsets 18, which may each be passed to a respective one of a plurality of independent variational quantum circuits 20 and processed according to trainable variational parameters. Measured outputs 32 of the variational quantum circuits 20 may subsequently be processed by a fully connected classification MLP 34 to obtain an output label 36. Each of the variational quantum circuits 20 may comprise $M$ qubits, such that the $N$ features may be divided into $K = N/M$ flattened feature vector subsets 18, wherein $K$ is a natural number greater than one, i.e. $K \in \{2; 3; 4; ...\}$, assuming that one feature is encoded in each qubit of the variational quantum circuit 20.

Fig. 3B illustrates an example of a variational quantum circuit 20, which may be used in the system 10 depicted in Fig. 3A.

As shown in Fig. 3B each variational quantum circuit 20 of the plurality of variational quantum circuits 20 comprises a plurality of qubits 38, which may be initialized into an initial quantum state at the beginning of a computation, e.g. each qubit may be initialized in one of the computational basis states, $|0\rangle$ or $|1\rangle$, as shown in the figure. Subsequently, a number of encoding gates 40 may be applied to the states of the qubits 38 to encode input features $\{x_1,...,x_5\}$ into the quantum states of the qubits 38, which in the example can be achieved through single-qubit (X) rotations, with a rotation angle being proportional to the respective input feature.

Rotations about different axes in the computational space of the qubits 38 may be described by rotation operators

$$X(\theta) = \exp(-i\sigma_x\theta/2) \text{, and} \qquad (2)$$

$$Y(\theta) = \exp(-i\sigma_y\theta/2), \qquad (3)$$

defining respective rotations about a respective angle $\theta$. In the figure, vertical connections between horizontal lines with a filled circle on one end and an open circle with an inlaid cross on the other end represent "CNOT" gates, which may be mathematically described by

$$CNOT = \exp\left(i\frac{\pi}{4}(I - \sigma_{z_1})(I - \sigma_{x_2})\right) \text{, or alternatively by} \qquad (3)$$

$$CNOT = \begin{bmatrix} 1 & 0 & 0 & 0 \\ 0 & 1 & 0 & 0 \\ 0 & 0 & 0 & 1 \\ 0 & 0 & 1 & 0 \end{bmatrix}. \qquad (3)$$

The CNOT gate may entangle the states of the respective two qubits 38, and may therefore result in a superposition state for harnessing a quantum advantage of the quantum circuit.

After a quantum state has been encoded in the qubits 38 by the encoding gates 40, the quantum states of the qubits 38 may be transformed according to a plurality of $i$ layers 42 of quantum gates, wherein each layer 42 may comprise a plurality of variational quantum gates 44 and a plurality of entangling gates 46. The variational quantum gates 44 transform the states of the qubits 38 according to variational parameters $\{w_1,w_2,...,w_{15}\}$, which may correspond to respective rotation angles of single qubit rotation gates as the variational quantum gates 44, and each layer 42 may have respective different variational parameters. The entangling gates 46 can entangle the states of a plurality of qubits 38, such as through the application of CNOT gates as shown in Fig. 3B.

Although not shown in Fig. 3B, the skilled person will appreciate that the encoding gates 40 may also be part of the layers 42 of quantum gates, e.g. to implement a data re-uploading of the input features and/or to encode multiple input features into each qubit 38 of the variational quantum circuit 20.

After the $i$ layers 42 of quantum gates have been sequentially applied to the quantum states of the qubits 38, the states of the qubits 38 may be measured by a detector 48, such as a plurality of single qubit detectors. Each variational quantum circuit 20 may be executed repeatedly to determine the measured output 32 as an expectation value of the finally measured quantum state of the qubits 38.

As shown in Fig. 3A, each of the independent variational quantum circuits 20 receives a respective flattened feature vector subset 18 and may independently process its respective input features to determine a respective measured output. Each of the independent variational quantum circuits 20 may feature different variational parameters $\{w_1,w_2,...,w_{15}\}$, such that each of the different flattened feature vector subsets 18 may be effectively processed by a different variational quantum circuit 20.

The measured outputs 32 can be passed to a machine learning model, in particular a fully connected layer of artificial neurons 34, such as to combine the information obtained from the measured outputs 32 of the plurality of variational quantum circuits 20 and to obtain the output label 36.

The hybrid quantum-classical computation system 10 may be trained based on a training dataset of sample data, which may comprise a plurality of sample grids of input features 26 and corresponding sample output labels, such as the digits corresponding to the handwritten symbols.

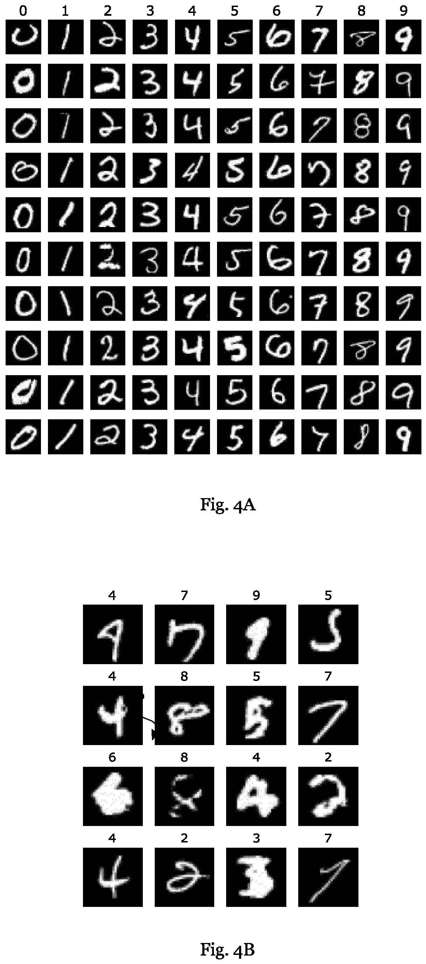

Fig. 4A and 4B illustrate examples of different handwritten symbols taken from the Modified National Institute of Standards and Technology (MNIST) database, which may be classified into fitting decimal digits 0-9 (as indicated above the symbols) by a classification system 10. Each of the pictures has a resolution of $28 \times 28$ pixels and may be considered as a grid of input features 26, wherein each pixel may be an input feature according to its associated grayscale color value. While the handwritten symbols in Fig. 4A may generally be unambiguously mapped to a corresponding digit, the examples in Fig. 4B may be misinterpreted by a human classifier.

The handwritten number dataset is widely used for testing the performance of various Neural Network (NN) models. In such models, the main goal is generally to classify each image by labeling it with a fitting class label using a machine based classifier, which usually involves recognizing which digit is in the image.

There are a total of 70000 images in the MNIST database, which in the following will be divided into two groups: 60000 images will be designated as training images and the remaining 10000 images will be designated as testing images for assessing a performance of the machine based classifier.

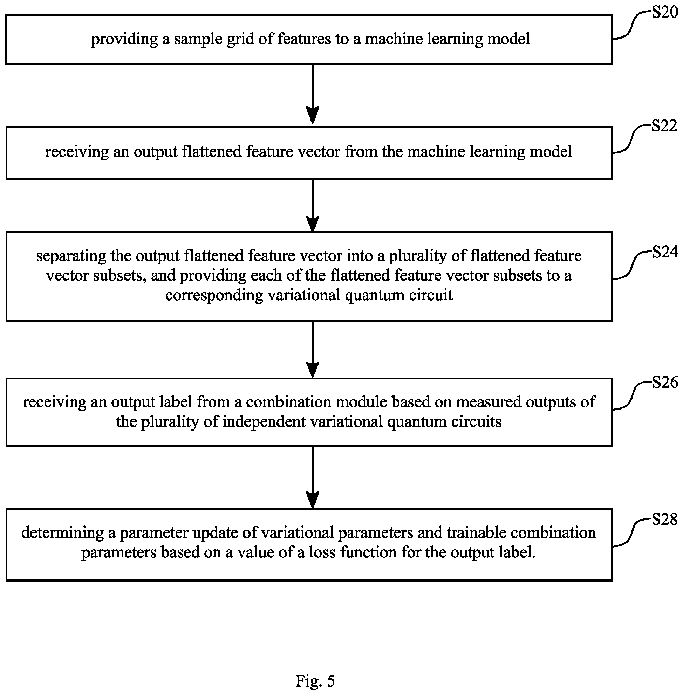

Fig. 5 illustrates a method for training a hybrid quantum-classical computation system 10 for approximating a labeling function for a grid of input features 26. The method comprises the steps of providing a sample grid of features 26 of the sample dataset to a machine learning model (S20), and receiving an output flattened feature vector 16 from the machine learning model (S22). The method further comprises separating the output flattened feature vector 16 into a plurality of flattened feature vector subsets 18, providing each of the flattened feature vector subsets 18 to a corresponding variational quantum circuit 20 of the plurality of variational quantum circuits 20 (S24), and receiving an output label from a combination module 24 based on measured outputs 32 of the plurality of independent variational quantum circuits 20 (S26). The method further comprises determining a parameter update of variational parameters and trainable combination parameters based on a value of a loss function for the output label 36 and the label (S28).

The machine learning model may be implemented as a multilayer perceptron, and the method may start with a step of initializing the trainable parameters of the plurality of variational quantum circuits 20 (variational parameters), the machine learning model, and the trainable weighting factors forming the combination parameters for combining the outputs of the plurality of independent variational quantum circuits 20. The subsequent step may comprises the choice of a loss (cost) function for comparing the output label 36 produced by the hybrid quantum-classical computation system 10 with a sample label of a training dataset, such as the mean squared error (MSE).

The training algorithm may then iteratively select a data point, including a grid of input features 26 and a corresponding sample label, of the training dataset and process it with the machine learning model and subsequently the plurality of independent variational quantum circuits 20. The variational quantum circuits 20 encode respective subsets 18 of a flattened feature vector 18 produced by the machine learning model using a chosen encoding routine (e.g. angle embedding as shown in Fig. 3B). The expectation value of the chosen measurement operator may be measured after executing the plurality of independent variational quantum circuits 20 in parallel or sequentially, e.g. the expectation value of the qubits 38 being in "0" or "1" states, based on a Z-axis projection.

A prediction is obtained as an output label 36 by combining the outputs of the variational quantum circuits 20 according to the trainable weights of the combination layer 24 and the predicted output label 36 is compared to the sample label of the training dataset.

Further, a gradient of the comparison value (cost) may be determined with respect to a portion or all trainable parameters. Subsequently, the next data point may be processed, e.g. until all data points of the training dataset have been passed. The gradient may be determined with respect to all the parameters in the system 10 and the average gradient for all the data points may be used to update the trainable parameters, e.g. based on an optimization algorithm, such as adaptive moment estimation algorithm (Adam). The iterative training process may terminate at any point during the training, e.g. if the cost function reaches a certain value, reaches a plateau, or is stuck in a loop about a point in the parameter space. The skilled person will appreciate that it may not be necessary to evaluate the cost function at each iterative step, but it may be sufficient to compute the gradient during the training.

Based on the computed gradients, an average gradient for the processed data points may be determined and may be used to update the trainable parameters based on the chosen optimization algorithm and the selected learning rates, which may terminate one epoch of the training.

The training may subsequently recommence with the first data point, e.g. until it is determined that the parameter update no longer improves the comparison value, until a pre-determined number of epochs, or until a pre-determined comparison value has been reached.

The composition of the hybrid quantum-classical computation system 10 and the hyper-parameters of the training may be selected based on the labeling function. For example, for a task of labeling a series of handwritten characters, such as the examples recorded for handwritten numbers in the Modified National Institute of Standards and Technology (MNIST) database, the input layers may be adapted to the size of the database images, and the output layers may be adapted to conform to a labeling according to the actual digit, e.g. ranging from 0-9.

As part of implementing the variational quantum circuits 20, the initial circuit definition may be passed to a quantum circuit implementation device, which may adapt the variational quantum circuits 20 based on the architecture of the quantum device, such as to optimize the variational quantum circuits 20 for the quantum hardware. For example, when the initial variational quantum circuit 20 specifies a CNOT operation, a hardware implementation may comprise a combination of single qubit and multi qubit state rotations. Moreover, multiple gates may be combined into a different arrangement of quantum gates, such as to implement the variational quantum circuit 20 with hardware efficient quantum gates.

The skilled person will appreciate that the number of features in the flattened feature vector 16 preferably is a multiple of the number of qubits 38 in the plurality of variational quantum circuits 20 to avoid wasting of processing resources. However, the skilled person will appreciate that some inputs to one of the variational quantum circuits 20 may be left at a fixed value, or that one of the plurality of variational quantum circuits 20 may have a different circuit architecture, e.g. fewer qubits 38, such as to adapt the system 10 or method to a pre-defined convolutional filtering architecture with a number of features in the flattened feature vector 16, which is not a multiple of the general number of qubits 38 in the plurality of independent variational quantum circuits 20.

To test the hybrid quantum-classical computation system 10 obtainable by the aforementioned training method, the plurality of independent variational quantum circuits 20 were implemented on a classical simulator based on the illustrated circuit configuration in Fig. 3B including four different independent variational quantum circuits 20, which each have three layers 42 of quantum gates acting on five qubits 38. The system 10 was compared to purely classical machine-learning classifiers which differ from the hybrid quantum-classical computation system 10 mainly in that the classifying block 22 comprises a fully connected MLP device implemented on classical hardware instead of the plurality of variational quantum circuits 20.

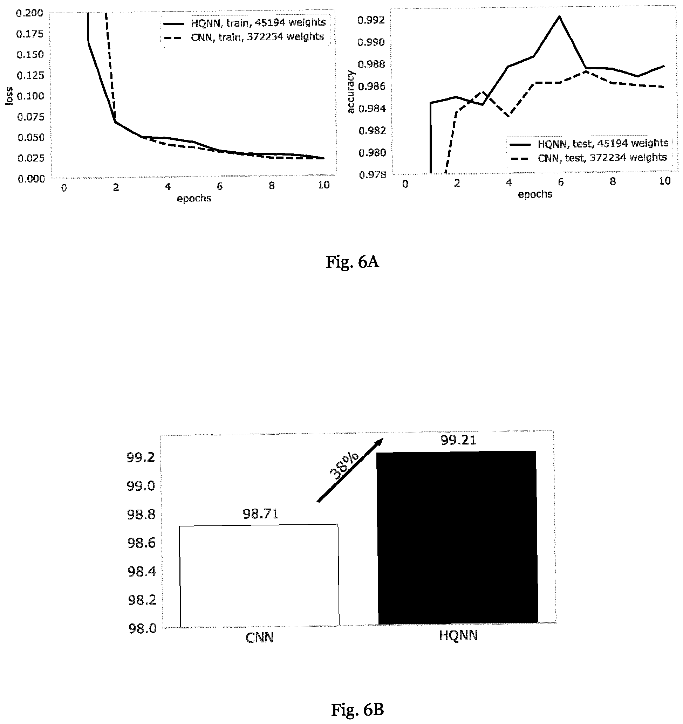

Fig. 6A illustrates results from training a hybrid quantum-classical computation system 10 as illustrated in Fig. 3A, 3B (HQNN), when compared to the performance of a purely classical convolutional neural network (CNN), wherein the variational quantum circuits 20 are replaced with a multilayer perceptron, MLP, and both systems are trained based on the MNIST dataset to predict the correct digit. The left figure tracks the training loss over epochs of training the respective systems, whereas the right figure tracks the accuracy of the respective system of predicting the correct label for handwritten samples of the testing images of the MNIST dataset. As indicated in the figure legend, the hybrid quantum-classical computation system 10 comprises less trainable weights (parameters) than the CNN against which it is tested.

Fig. 6B illustrates a bar chart of the relative performance, i.e. accuracy of predicting the correct label for unseen handwritten symbols in the validation dataset, for the CNN on the left and the hybrid quantum-classical computation system 10 on the right. Despite the about 8 times lower number of parameters used for constructing the hybrid quantum-classical computation system 10 as compared with the CNN, the hybrid quantum-classical computation system 10 is better at predicting the correct label than the CNN, wherein the probability of attributing a false label is reduced by 38%, and the final accuracy is at about 99.21%.

Thus, the system 10 using the plurality of variational quantum circuits 20 may achieve similar or greater accuracy than a corresponding classical classifier with less trainable parameters. This can be advantageous in situations, where the number of samples in a sample dataset for training the classifier is low, or comparatively low for complex tasks, in which the classical classifier may scale in complexity with the complexity of the task. The inventors found that despite the plurality of variational quantum circuits 20 processing only respective subsets of the flattened feature vector 16, and despite the correct label generally depending on the complex arrangement of the features in the grid of features 26, the system 10 may nevertheless correctly attribute a matching label to the images, indicating that the system 10 may be advantageously applied for classification tasks of feature grids 26 in near-term quantum computing devices.

In the preceding description, the convolutional block 12 was generally implemented as a classical convolutional block 12, based on classical convolutional filters implemented on classical features. The skilled person will however appreciate that the system 10 and method are not generally limited to such an embodiment, but portions of the convolutional block 12 may also be implemented using quantum circuits, e.g. using quanvolutional layers.

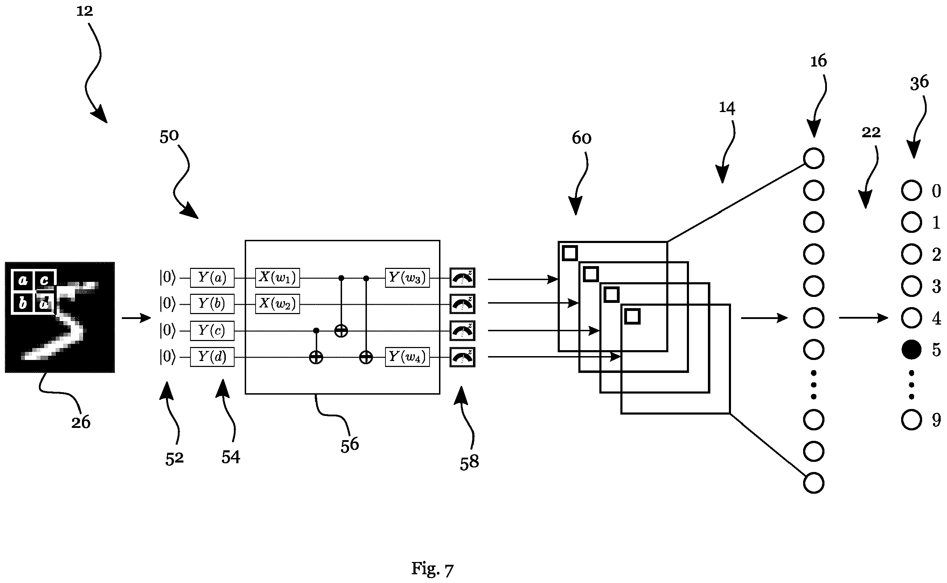

Fig. 7 illustrates an example of a convolutional block 12 comprising a quanvolutional layer 50. In the illustrated example, the quanvolutional layer 50 is configured to receive a subset of a grid of features, such as the grid of input features 26, or an intermediate filtered grid of features 28a-d, and encode the features into qubits 52 of the quanvolutional layer 50. The illustrated quanvolutional layer 50 comprises four qubits 52 and may be configured to receive a subset of the grid of input features 26 comprising four features, such as a $2\times2$ subset of the grid of input features 26, similar to the action of a classical convolutional filter.

The quanvolutional layer 50 may encode the input features via encoding gates 54, e.g. via angle embedding, into the quantum states of the qubits 52, and may transform the states of the qubits 52 through the action of a layer of quantum gates 56. The layer of quantum gates 56 may comprise multi-qubit gates, such as CNOT gates and may further comprise variational quantum gates, wherein an action of the variational quantum gates on the quantum states of the qubits 52 may be determined by respective trainable variational parameters. In the illustrated example, the layer of quantum gates 56 is applied once, but the skilled person will appreciate that the layer of quantum gates 56 may be applied multiple times for transforming the initial states of the qubits 52.

After the layer of quantum gates 56 has acted on the quantum states of the qubits 52, the quantum states may be measured by a detection assembly 58, e.g. a plurality of single qubit detectors, which may measure a Z-projection of the quantum states of all qubits 52.

The quanvolutional layer 50 may be applied in parallel to all possible matching subgroups of a grid of features 26, 28a-d provided as an input, e.g. all subgroups of 2×2 squares of neighboring features in the input, and may provide an output for each measured qubit, i.e. four measured outputs. The quanvolutional layer 50 may feature the same variational parameters for all subgroups of the grid of features 26, 28a-d, or in other words, the same quanvolutional layer 50 may be applied to different subgroups of the grid of features 26, 28a-d provided as an input. Each of the measured outputs may be considered as an output of a different filter, such that the result of applying the quanvolutional layer 50 to a grid of features 26, 28a-d as an input may be four different filtered grids of features 60, which may be processed further by additional quanvolutional layers 50, or by classical convolutional filters (not shown in Fig. 7).

The quanvolutional layer 50 may be trained similar to a classical convolutional layer as described above for the independent variational quantum circuits 20, e.g. by optimizing the variational parameters based on an optimization algorithm including adaptive moment estimation as well as gradient computation for the variational parameters, for example based on the parameter shift rule.

The filtered grids of features 60 may be flattened by a flattening layer 14 to obtain a flattened feature vector 16, and the flattened feature vector may be processed by a classifying block 22 to obtain an output label 36 for the grid of input features 26, wherein the classifying block 22 may be implemented at least partially using a variational quantum circuit 20, as described above.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | hybrid quantum-classical computation system |
| 12 | convolutional block |
| 14 | flattening layer |
| 16 | flattened feature vector |
| 18 | flattened feature vector subset |
| 20 | variational quantum circuit |
| 22 | classifying block |
| 24 | combination layer |
| 26 | grid of input features |
| 28a-d | filtered grid of input features |
| 30 | intermediate flattened feature vector |
| 32 | measured outputs |
| 34 | fully connected MLP |
| 36 | output label |
| 38 | qubits |
| 40 | encoding gates |
| 42 | layers of quantum gates |
| 44 | variational quantum gates |
| 46 | entangling gates |
| 48 | detector |
| 50 | quanvolutional layer |
| 52 | qubits |
| 54 | encoding gates |
| 56 | layer of quantum gates |
| 58 | detection assembly |

60      filtered grids of features

**Claims**

1.  A hybrid quantum-classical computation system (10) for classifying a grid of features (26, 28, 28a-d) provided as an input, the system (10) comprising:

    a convolutional block (12) comprising a convolutional filter configured to receive the grid of features (26, 28, 28a-d) as an input and to output (32) a plurality of output features (28, 28a-d) for the grid of features (26, 28, 28a-d) based on a trainable configuration of the convolutional filter;
    a flattening layer (14) for transforming the filtered grid of output features (28, 28a-d) received from the convolutional block (12) into a flattened feature vector (16);
    a classifying block (22) configured to receive the flattened feature vector (16, 18) and to generate an output classification, wherein the classifying block (22) comprises a plurality of independent variational quantum circuits (20), each comprising a plurality of quantum gates (40, 44, 46) acting on qubits (38) of a qubit register of the respective variational quantum circuit (20), the plurality of quantum gates (40, 44, 46) comprising variational quantum gates (44), wherein the action of a variational quantum gate (44) on the qubits (38) of the qubit register is parametrized according to an associated variational parameter, and encoding gates (40) for modifying a state of the qubits (38) of the qubit register according to an input feature vector (16, 18);
    wherein the variational quantum circuits (20) of the plurality of independent variational quantum circuits (20) receive different subsets of features (18) from the flattened feature vector (16) as the input feature vector; and
    wherein measured outputs (32) of the plurality of independent variational quantum circuits (20) are combined to determine a label (36) for the grid of input features (26, 28, 28a-d) as the output classification.

2.  The hybrid quantum-classical computation system (10) of any one of the preceding claims, wherein output states of all qubits (38) in the qubit register of one of the plurality of independent variational quantum circuits (20) are independent from the actions of quantum gates (40, 44, 46) of another one of the plurality of independent variational quantum circuits (20).

3.  The hybrid quantum-classical computation system (10) of any one of the preceding claims, wherein the variational parameters of one of the plurality of independent variational quantum circuits (20) are different from the variational parameters of another one of the plurality of independent variational quantum circuits (20).

4.  The hybrid quantum-classical computation system (10) of any one of the preceding claims, wherein each of the plurality of independent variational quantum circuits (20) comprises multiple layers of quantum gates (42), wherein each layer (42) of the multiple layers of quantum gates (42) in particular comprises a variational quantum gate (44) for each of the qubits (38) of the qubit register.

5.  The hybrid quantum-classical computation system (10) of any one of the preceding claims, wherein the plurality of independent variational quantum circuits (20) is implemented in quantum hardware.

6.  The hybrid quantum-classical computation system (10) of any one of the preceding claims, wherein the convolutional block (12) and/or the flattening layer (14) is implemented in classical hardware, in particular using a trainable machine learning model.

7.  The hybrid quantum-classical computation system (10) of any one of the preceding claims, wherein the plurality of independent variational quantum circuits (20) each comprise at least two qubits (38) in their respective qubit registers.

8.  The hybrid quantum-classical computation system (10) of any one of the preceding claims, wherein each of the plurality of independent variational quantum circuits (20) comprises an entangling gate (46) for entangling quantum states of at least two of the qubits (38) of the respective qubit register.

9.  The hybrid quantum-classical computation system (10) of any one of the preceding claims, wherein the quantum states of qubits (38) of different variational quantum circuits (20) of the plurality of independent variational quantum circuits (20) are not entangled prior to measurement.

10. The hybrid quantum-classical computation system (10) of any one of the preceding claims, wherein trainable parameters of the convolutional block (12), the flattening layer (14), and the classifying block (22) are obtained based on a joint training process, in particular of a machine learning model implemented in classical hardware and the plurality of independent variational quantum circuits (20) implemented in quantum hardware.

11. The hybrid quantum-classical computation system (10) of any one of the preceding claims, wherein each of the variational quantum circuits (20) of the plurality of independent variational quantum circuits (20) is configured to encode a number of inputs into the quantum states of the qubits (38) of its qubit register, and the input feature vector (16, 18) comprises a number of features, which is a multiple of the number of inputs of the variational quantum circuits (20) of the plurality of independent variational quantum circuits (20).

12. The hybrid quantum-classical computation system (10) of any one of the preceding claims, wherein the measured outputs (32) of the plurality of independent variational quantum circuits (20) are combined using a trainable layer of artificial neurons implemented in classical hardware, in particular a fully connected layer (24) of artificial neurons implemented in classical hardware.

13. A method for determining a label (36) for a grid of input features (26, 28, 28a-d) based on a hybrid quantum-classical computation algorithm, the method comprising:

   receiving the grid of input features (26, 28, 28a-d) and generating a filtered grid of features (26, 28, 28a-d) based on the grid of input features (26, 28, 28a-d) and a convolutional filter, wherein the convolutional filter is configured to output a plurality of output features for the grid of input features (26, 28, 28a-d) based on a trainable configuration of the convolutional filter;
   flattening the filtered grid of output features into a flattened feature vector (16);
   separating the flattened feature vector (16) into a plurality of flattened feature vector subsets (16, 18), and encoding each of the flattened feature vector subsets (18) into qubits (38) of a corresponding variational quantum circuit (20) of a plurality of independent variational quantum circuits (20), each of the plurality of independent variational quantum circuits (20) comprising an encoding gate (40) configured to act on the quantum states of a qubit (38) based on a feature of the corresponding subset (18) of the plurality of flattened feature vector subsets (16, 18), a variational quantum gate (44), wherein the action of a variational quantum gate (44) on the qubits (38) of the qubit register is parametrized according to an associated variational parameter, and an entangling gate (46) for creating a superposition of the quantum states of two qubits (38) of the corresponding circuit, obtaining measured outputs (32) based on measuring an output state of each of the plurality of independent variational quantum circuits (20) and combining the measured outputs (32) of the plurality of independent variational quantum circuits (20) to determine a corresponding output label (36).

14. A method for training a hybrid quantum-classical computation system (10) for approximating a labeling function for an input grid of features (26, 28, 28a-d), the system (10) comprising

   a machine learning model, implemented on a classical processing system, configured to generate a flattened feature vector (16, 18) based on the grid of features (26, 28, 28a-d) according to a parametrized transfer function, wherein the parametrized transfer function is parametrized by machine-learning parameters, and wherein the machine learning model comprises convolutional layers (12) of artificial neurons;
   a plurality of independent variational quantum circuits (20) each comprising a plurality of quantum gates (40, 44, 46) acting on qubits (38) of a respective qubit register, the plurality of quantum gates (40, 44, 46) comprising variational quantum gates (44), wherein a parametrized action of a variational quantum gate (44) on the qubits (38) of the qubit register is parametrized according to an associated variational parameter, and encoding gates (40) for modifying a state of the qubits (38) of the qubit register according to an input feature vector (16, 18);
   wherein the variational quantum circuits (20) of the plurality of independent variational quantum circuits (20) receive different subsets of features (18) from the flattened feature vector (16) as the input feature vector (16, 18); and
   a combination module (24), implemented on a classical processing system, configured to receive measured outputs (32) generated by the plurality of variational quantum circuits (20) and to combine measured outputs (32) of the plurality of independent variational quantum circuits (20) to determine a classification result, wherein the combination is based on a plurality of trainable combination parameters;
   the method comprising:

      providing a sample grid of features (26, 28, 28a-d) to the machine learning model, and receiving the output flattened feature vector (16) from the machine learning model;

separating the output flattened feature vector (16) into a plurality of flattened feature vector (16) subsets, and providing each of the flattened feature vector (16) subsets to a corresponding variational quantum circuit (20) of the plurality of variational quantum circuits (20);

receiving an output label (36) from the combination module (24) based on the measured outputs (32) of the plurality of independent variational quantum circuits (20); and

determining a parameter update of the variational parameters and the trainable combination parameters based on a value of a loss function for the output label (36).

15. A non-transitory machine readable medium storing machine readable instructions, which when the machine readable instructions are executed by a processing system cause the processing system to implement and/or to control a system (10) according to any one of claims 1-12 and/or to implement a method according to claim 13 or 14.

Fig. 1

receiving a grid of input features and generating a filtered grid of features based on the grid of input features and a convolutional filter — S10

flattening the filtered grid of output features into a flattened feature vector — S12

separating the flattened feature vector into a plurality of flattened feature vector subsets — S14

encoding each of the flattened feature vector subsets into qubits of a corresponding circuit of a plurality of independent variational quantum circuits — S16

obtaining measured outputs based on measuring an output state of each of the plurality of independent variational quantum circuits — S18

combining the output states of the plurality of independent variational quantum circuits to determine a corresponding output label — S20

Fig. 2

Fig. 3A

Fig. 3B

Fig. 4A

Fig. 4B

```
┌─────────────────────────────────────────────────────────────────────┐  ┌─S20
│       providing a sample grid of features to a machine learning model │  │
└─────────────────────────────────────────────────────────────────────┘
                                    │
                                    ▼
┌─────────────────────────────────────────────────────────────────────┐  ┌─S22
│   receiving an output flattened feature vector from the machine learning model │
└─────────────────────────────────────────────────────────────────────┘
                                    │
                                    ▼
┌─────────────────────────────────────────────────────────────────────┐  ┌─S24
│  separating the output flattened feature vector into a plurality of flattened feature │
│  vector subsets, and providing each of the flattened feature vector subsets to a │
│              corresponding variational quantum circuit                │
└─────────────────────────────────────────────────────────────────────┘
                                    │
                                    ▼
┌─────────────────────────────────────────────────────────────────────┐  ┌─S26
│  receiving an output label from a combination module based on measured outputs of │
│       the plurality of independent variational quantum circuits       │
└─────────────────────────────────────────────────────────────────────┘
                                    │
                                    ▼
┌─────────────────────────────────────────────────────────────────────┐  ┌─S28
│  determining a parameter update of variational parameters and trainable combination │
│      parameters based on a value of a loss function for the output label. │
└─────────────────────────────────────────────────────────────────────┘
```

Fig. 5

Fig. 6A

Fig. 6B

Fig. 7

Europäisches
Patentamt

European
Patent Office

Office européen
des brevets

# EUROPEAN SEARCH REPORT

Application Number

EP 23 16 2338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMUEL YEN-CHI CHEN ET AL: "Hybrid Quantum-Classical Graph Convolutional Network", ARXIV.ORG, CORNELL UNIVERSITY LIBRARY, 201 OLIN LIBRARY CORNELL UNIVERSITY ITHACA, NY 14853, 15 January 2021 (2021-01-15), XP081860123, * abstract * * page 9 - page 10 * * page 12 * * figure 7 * | 1-15 | INV. G06N10/60 ADD. G06N10/20 G06N10/40 |
| X | ALESSANDRO SEBASTIANELLI ET AL: "On Circuit-based Hybrid Quantum Neural Networks for Remote Sensing Imagery Classification", ARXIV.ORG, CORNELL UNIVERSITY LIBRARY, 201 OLIN LIBRARY CORNELL UNIVERSITY ITHACA, NY 14853, 1 December 2021 (2021-12-01), XP091111190, * abstract * * section V * | 1-15 | |
| X | ALAM MAHABUBUL ET AL: "Quantum-Classical Hybrid Machine Learning for Image Classification (ICCAD Special Session Paper)", 2021 IEEE/ACM INTERNATIONAL CONFERENCE ON COMPUTER AIDED DESIGN (ICCAD), IEEE, 1 November 2021 (2021-11-01), pages 1-7, XP034057547, DOI: 10.1109/ICCAD51958.2021.9643516 [retrieved on 2021-12-08] * abstract * * sections II, III.B * | 1-15 | TECHNICAL FIELDS SEARCHED (IPC) G06N |

The present search report has been drawn up for all claims

| Place of search | Date of completion of the search | Examiner |
|---|---|---|
| The Hague | 22 June 2023 | Papadakis, Georgios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENDERSON et al.** *Quanvolutional Neural Networks: Powering Image Recognition with Quantum Circuits*